# EUROPÄISCHE PATENTSCHRIFT

(11) **EP 3 298 474 B1**
(45) Veröffentlichungstag und Bekanntmachung des Hinweises auf die Patenterteilung: **30.11.2022**
(21) Anmeldenummer: 16720720.8
(22) Anmeldetag: 29.04.2016
(51) Int. Cl.: G06F 3/01, G06T 19/00, G02B 27/01, G02B 27/00

(54) **VERFAHREN ZUM BETREIBEN EINER DATENBRILLE IN EINEM KRAFTFAHRZEUG UND SYSTEM MIT EINER DATENBRILLE**
METHOD FOR OPERATING A HEAD-MOUNTED DISPLAY IN A MOTOR VEHICLE, AND SYSTEM COMPRISING A HEAD-MOUNTED DISPLAY
PROCÉDÉ DE FONCTIONNEMENT DE LUNETTES INTELLIGENTES DANS UN VÉHICULE AUTOMOBILE ET SYSTÈME ÉQUIPÉ DE LUNETTES INTELLIGENTES

(30) Priorität: 21.05.2015 DE 102015006612
(43) Veröffentlichungstag der Anmeldung: 28.03.2018
(73) Patentinhaber: Audi AG, 85045 Ingolstadt (DE)
(72) Erfinder: KÜHNE, Marcus, 92339 Beilngries (DE)
(74) Vertreter: Hofstetter, Schurack & Partner
(86) Internationale Anmeldenummer: PCT/EP2016/000704
(87) Internationale Veröffentlichungsnummer: WO 2016/184541

(56) Entgegenhaltungen:
- EP-A1- 1 990 674
- DE-A1-102005 058 018
- DE-A1-102013 005 342
- JP-B2- 5 158 063
- US-A1- 2010 289 632

## Beschreibung

Die Erfindung geht aus von einem Verfahren zum Betreiben einer Datenbrille in einem Kraftfahrzeug, wobei mittels der Datenbrille ein Bild angezeigt wird, das einer realen Umgebung der Datenbrille zumindest zum Teil überlagert ist, wenn die reale Umgebung durch die Datenbrille betrachtet wird.

Unter einer Datenbrille ist hierbei insbesondere eine elektronische Datenbrille, wie beispielsweise eine Augmented-Reality-Brille zu verstehen. Solche Brillen ermöglichen zum einen die Sicht auf die reale Umgebung und zum anderen das Einblenden von künstlichen, digitalen Inhalten, die dann an entsprechender Stelle der Sicht auf die reale Umgebung überlagert sind. Dadurch wird es ermöglicht, dem Benutzer in die reale Umgebung zusätzliche Informationen einzublenden.

Gerade auch im Kraftfahrzeugbereich können derartige Technologien besonders vorteilhaft sein, beispielsweise um den Fahrer oder Mitfahrern von Kraftfahrzeugen bestimmte Zusatzinformationen bereitzustellen. Augmented- Reality-Brillen können in Zukunft für den Fahrer wie auch Mitfahrer als 360° kontaktanaloges Head-Up-Display dienen und damit einen Mehrwert bieten, der den permanenten Einsatz während der Fahrt und die damit verbundenen leichten Komforteinschränkungen rechtfertigt.

Die DE 10 2013 005 342 A1 eine Kraftfahrzeugbedienvorrichtung, die eine Head-Unit und eine Augmented-Reality-Brille mit einem Display umfasst. Dabei ist die Augmented-Reality-Brille operativ mit der Head-Unit verbunden. Weiterhin kann ein kraftfahrzeuggebundener Außenbereichssensor, wie beispielweise eine Nachtsichtkamera, kommunikativ mit der Head-Unit verbunden sein. Weiterhin wird von der Head-Unit ein vorbestimmter Display-Inhalt an die Augmented-Reality-Brille gesendet und dieser auf dem Display der Augmented-Reality-Brille angezeigt, wobei es sich bei den Display-Inhalten um Abbildungsdaten des Außenbereichssensors handeln kann. Dadurch kann dem Blick in Fahrtrichtung bei Dunkelheit auch das Bild einer in Fahrtrichtung weisenden Nachtsichtkamera überlagert werden.

Die EP 1 990 674 beschreibt ein Head-Mounted-Display-System mit einem Head-Mounted-Display, auf welchem Umgebungsinformationen angezeigt werden können, die von außenseitig an einem Kraftfahrzeug angeordneten Umgebungssensoren erfasst wurden. Die Sensoren können dabei auch Nachtsichteinrichtungen umfassen.

Die Druckschrift JP 5158063 B2 beschreibt eine Anzeigevorrichtung für Fahrzeuge, welche einen Bilderkennungsabschnitt aufweist. Die Anzeigevorrichtung ist ausgebildet, einen Fußgänger aus einem Nahinfrarotlichtbild zu detektieren, welches sequentiell von einer Kamera aufgenommen wird. Eine Anzeigeeinheit ist ausgestaltet, das Nahinfrarotlichtbild sequentiell darzustellen. Eine Markierungseinheit ist ausgebildet, einen Fußgängererfassungsrahmen innerhalb des Nahinfrarotlichtbildes darzustellen.

Aufgabe der vorliegenden Erfindung ist es daher, ein Verfahren zum Betreiben einer Datenbrille in einem Kraftfahrzeug und ein System mit einer Datenbrille bereitzustellen, welche Verbesserungen, insbesondere hinsichtlich dem Bereitstellen von fahrerunterstützenden Funktionen, ermöglichen.

Diese Aufgabe wird gelöst durch ein Verfahren zum Betreiben einer Datenbrille in einem Kraftfahrzeug und ein System mit einer Datenbrille gemäß den unabhängigen Ansprüchen. Vorteilhafte Ausgestaltungen der Erfindung finden sich in den abhängigen Ansprüchen.

Die vorliegende Erfindung ist durch die unabhängigen Ansprüche definiert. Vorteilhafte Ausführungsformen sind in den abhängigen Ansprüchen, in der nachfolgenden Beschreibung und in den Zeichnungen beschrieben.

Die Erfindung umfasst ein Verfahren zum Betreiben einer Datenbrille in einem Kraftfahrzeug wird mittels der Datenbrille ein Bild angezeigt, das einer realen Umgebung der Datenbrille zumindest zum Teil überlagert ist, wenn die reale Umgebung durch die Datenbrille betrachtet wird. Dies ist so zu verstehen, dass das Bild aus Sicht eines Benutzers, der die Datenbrille trägt, der realen Umgebung überlagert angezeigt wird, auch wenn die reale Umgebung beispielsweise bedingt durch die überlagerte Darstellung des Bildes gar nicht durch die Datenbrille sichtbar ist. Dabei stellt das Bild ein Bild der realen Umgebung dar, das mittels einer Nachtsicht-Bildaufnahmeeinrichtung aufgenommen wird, wobei das Bild derart angezeigt wird, dass ein von einem in der realen Umgebung angeordneten Objekt aufgenommenes Bildobjekt in Überdeckung mit dem Bild in der realen Umgebung angezeigt wird.

Die Erfindung beruht dabei auf der Erkenntnis, dass die Datenbrille, wie beispielsweise eine Augmented-Reality-Brille, nicht nur dazu genutzt werden kann, künstliche, digitale Inhalte einem Nutzer einzublenden, sondern ein aufgenommenes Bild der Umgebung selbst, nämlich als Nachtsichtaufnahme bzw. Nachtsichtbild, in die reale Umgebung einzublenden. Dadurch wird es vorteilhafterweise ermöglicht, dass nun der Fahrer in der Lage ist, durch die Datenbrille die vor sich liegende Szenerie im Nachtsichtmodus um wesentliche Informationen angereichert zu betrachten. Bei Dunkelheit und schlechter Sicht können durch die Nachtsichtaufnahme potenzielle Gefahren deutlich besser wahrgenommen werden, was die Verkehrssicherheit vor allem bei Nachtfahrten erhöht. Die Erfindung ermöglicht es daher, durch die Datenbrille zusätzliche fahrerunterstützende Informationen bereitzustellen und darüber hinaus die Verkehrssicherheit zu steigern.

Das Verfahren wird bevorzugt wiederholt durchgeführt, das heißt, es werden durch die Nachtsicht-Bildaufnahmeeinrichtung wiederholt, z.B. periodisch, Bilder der Umgebung aufgenommen, z.B. in Form einer Videoaufnahme, und diese in ihrer Aufnahmereihenfolge mit der Datenbrille angezeigt.

Weiterhin ist es vorteilhaft, wenn dabei das aufgenommene Bild deckungsgleich über das Realbild gelegt wird, was erfindungsgemäß dadurch realisiert ist, dass das Bildobjekt in einem aufgenommenen Bild, das also zu einem realen Objekt in der realen Umgebung korrespondiert, in Überdeckung mit diesem angezeigt wird, das heißt wiederum aus der Benutzerperspektive bzw. aus einer die Benutzerperspektive repräsentierenden Perspektive und damit, wenn die reale Umgebung durch die Datenbrille betrachtet wird bzw. wenn durch die Datenbrille geblickt wird bzw. diese getragen wird. Um das Bildobjekt an der richtigen Stelle einzublenden, kann es vorgesehen sein, das eine jeweilige gemittelte Augenposition bzw. Durchschnitts-Augenposition bezüglich der Brille angenommen und vorgegeben wird, und das Bildobjekt so angezeigt wird, dass es sich auf einer gedachten Verbindungslinie zwischen einer dieser Augenpositionen eines Auges und dem realen Objekt befindet. Das aufgenommene Bild kann auch zweifach, einmal für das rechte Auge und einmal für das linke Auge eingeblendet werden, so dass sich das zum einen Auge korrespondierende Bildobjekt des zu diesem Auge korrespondierenden Bildes auf der Verbindungslinie zwischen diesem Auge und dem realen Objekt eingeblendet wird und das zum anderen Auge korrespondierende Bildobjekt auf der Verbindungslinie zwischen diesem anderen Auge und dem realen Objekt angezeigt wird. Die Nachtsicht-Bildaufnahmeeinrichtung kann auch als 3D-Nachtsicht-Bildaufnahmeeinrichtung ausgebildet sein und zum Beispiel eine Stereo- bzw. zwei Nachtsichtkameras aufweisen, die ein Nachtsichtstereobild aufnehmen, so dass dann dem Benutzer ein 3D-Nachtsichtbild eingeblendet wird. In diesem Fall ist in den beiden von den jeweiligen Kameras aufgenommenen Bildern ein Bildobjekt das zum realen Objekt korrespondiert und aus unterschiedlichen Perspektiven aufgenommen wurde. Diese werden dann bevorzugt so angezeigt, dass sich das eine auf einer gedachten Verbindungslinie zwischen der Augenposition des einen Auges und dem realen Objekt befindet und das andere auf einer gedachten Verbindungslinie zwischen der Augenposition des anderen Auges und des realen Objekts. Durch eine 3D-Aufnahme und Anzeige des korrespondierenden 3D-Nachtsichtbildes wird der Realitätsgrad für den Benutzer deutlich gesteigert. Zudem ist gerade beim Fahren eines Kraftfahrzeugs die Tiefenwahrnehmung besonders relevant, gerade wenn es um die möglichst schnelle Erkennung von potentiellen Gefahrensituationen und einer möglichst guten Abschätzung einer Entfernung zu potentiellen Gefahrenstellen geht.

Als Nachtsicht-Bildaufnahmeeinrichtung kann beispielsweise eine oder mehrere Nachtsichtkameras und/oder ein Night-Vision-System, z.B. mit einer oder mehreren Infrarotkameras mit einer Sensitivität für verschiedene Infrarotwellenlängenbereiche, z.B. einem nahen Infrarotbereich von 780 nm bis 3 µm, und/oder auch eine Wärmebildkamera, z.B. mit einer Sensitivität für den mittleren Infrarotbereich von 5 µm bis 15 µm, verwendet werden. Auf diese Weise können dem Benutzer bei Dunkelheit normalerweise schlecht oder gar nicht sichtbare Objekte in seiner realen Umgebung durch die Brille sichtbar gemacht werden. Besonders vorteilhaft ist dies gerade im Zusammenhang mit der Erkennung von Personen, wie beispielsweise Fußgängern, aber auch von anderen Verkehrsteilnehmern, wie Kraftfahrzeugen, Verkehrsschildern oder Verkehrshinweisen und dergleichen.

Darüber hinaus kann es auch vorgesehen sein, dass die Datenbrille in zwei unterschiedlichen Modi, einem Normalmodus und einem Nachtsichtmodus, betrieben werden kann, wobei also im Nachtsichtmodus die von der Nachtsicht-Bildaufnahmeeinrichtung aufgenommenen Bilder der realen Umgebung überlagert angezeigt werden, und im Normalmodus diese Bilder nicht angezeigt werden und/oder aufgenommen werden und die Nachtsicht-Bildaufnahmeeinrichtung stromsparenderweise nicht aktiv ist. Dadurch lässt sich die Datenbrille besonders situationsangepasst verwenden. Beispielsweise kann es auch vorgesehen sein, dass ein Benutzer selbst den Nachtsichtmodus aktivieren kann, z.B. durch ein Bedienelement an der Brille oder auch im Kraftfahrzeug und das Kraftfahrzeug den entsprechenden Aktivierungs- oder auch Deaktivierungsbefehl über eine Kommunikationsverbindung zur Datenbrille weiterleitet. Damit kann ein Betrieb der Datenbrille angepasst auf die Bedürfnisse des Benutzers bereitgestellt werden kann.

Alternativ oder zusätzlich kann es auch vorgesehen sein, dass die Datenbrille automatisch in den Nachtsichtmodus wechselt, wenn eine vorbestimmte Beleuchtungsstärke oder Umgebungshelligkeit unterschritten wird und/oder wieder in den Normalmodus wechselt, wenn diese vorbestimmte Umgebungshelligkeit überschritten wird. Dazu können beispielsweise auch entsprechende Helligkeitssensoren verwendet werden, die zumindest kommunikativ mit der Datenbrille gekoppelt sind und/oder dem Kraftfahrzeug und an der Datenbrille und/oder im/am Kraftfahrzeug angeordnet sein können. Dies ermöglicht einen besonders komfortablen Betrieb der Datenbrille, da so keine Interaktion des Benutzer erforderlich ist, um ein situationsangepasstes Anzeigen der mit der Nachtsicht-Bildaufnahmeeinrichtung aufgenommenen Bilder zu ermöglichen.

Weiterhin kann die Nachtsicht-Bildaufnahmeeinrichtung an der Datenbrille angeordnet sein, zum Beispiel in einem Stirnbereich eines Benutzers, der die Datenbrille trägt, oder zwischen den Augen oder auch zwei Kameras über den jeweiligen Augen. Diese Positionen sind besonders vorteilhaft, da so die Perspektive des von der Nachtsicht-Bildaufnahmeeinrichtung aufgenommenen Bildes sich nur geringfügig von der Benutzerperspektive unterscheidet, wobei dieser Unterschied umso weniger ins Gewicht fällt, je weiter Objekte von der Datenbrille bzw. den Augen des Benutzers entfernt sind. Dies ist vor allem üblicherweise der Fall, wenn ein Fahrer ein Kraftfahrzeug fährt, da dieser dann auf Bereiche in seiner realen Umgebung fokussiert, z.B. auf die Straße, vorausfahrende Fahrzeuge, usw., die deutlich weiter entfernt sind als nur 1 oder 2 Meter. Dies ermöglicht es wiederum, das von der Nachtsicht-Bildaufnahmeeinrichtung aufgenommene Bild bzw. Bilder direkt und unverändert durch die Datenbrille einzublenden und eine korrespondierende Überdeckung mit der realen Umgebung zu bewerkstelligen, insbesondere ohne dass ein Unterschied in der Perspektive für den Benutzer wahrnehmbar ist.

Bei der Erfindung wird das Bildobjekt derart in Überdeckung mit dem Objekt in der Umgebung angezeigt, dass beim Betrachten der Umgebung durch die Datenbrille eine Begrenzung des Bildobjekts mit einer Begrenzung des Objekts der Umgebung zumindest bis auf eine vorbestimmte Toleranzabweichung übereinstimmt. Durch die zuvor beschriebenen Maßnahmen lässt sich dies auf eine einfache Weise bewerkstelligen. Diese Ausgestaltung wiederum gewährleistet es, dass ein Benutzer die durch die Brille angezeigten Objekte auch genau an der Stelle sieht, an der sich die realen Objekte auch tatsächlich befinden. Das System ist vorzugsweise so ausgelegt, dass das Bildobjekt mindestens einen Großteil des realen Objekts überdeckt und bevorzugt vollständig überdeckt und auch die Abweichungen der Objektkonturen und Bildobjektkonturen gering sind.

Des Weiteren ist es auch vorgesehen, dass das Bild mit einer vorbestimmten Latenzzeit in Bezug auf die Aufnahme des Bildes angezeigt wird, wobei zumindest das Bildobjekt in Abhängigkeit von der vorbestimmten Latenzzeit skaliert wird, so dass das Bildobjekt in Überdeckung mit dem Objekt in der Umgebung angezeigt wird. Weiterhin kann die Latenzzeit von der Datenbrille selbst ermittelt werden, zum Beispiel bei jeder Bildaufnahme und der korrespondierenden Anzeige des jeweiligen Bildes aktuell, oder es kann ein Mittelwert, zum Beispiel beruhend auf Erfahrungswerten oder Messwerten, vorbestimmt sein. Die Skalierung des Bildobjekts in Abhängigkeit von dieser Latenzzeit ist besonders vorteilhaft, da dadurch mögliche Änderungen des Bildobjekts, zum Beispiel in seiner Größe oder Position, gegenüber dem realen Objekt während dieser Latenzzeit kompensierbar sind.

Daher ist es erfindungsgemäß vorgesehen, dass das Bildobjekt in seiner Größe und/oder einer Anzeigeposition des Bildobjekts skaliert wird. Fährt ein Fahrer zum Beispiel in einem Kraftfahrzeug geradeaus, und wird ein reales Objekt mit der Nachtsicht-Bildaufnahmeeinrichtung aufgenommen und als Bildobjekt verzögert angezeigt, so würde dieses Bildobjekt zum Zeitpunkt der Anzeige kleiner erscheinen als das reale Objekt. Auch können das reale Objekt und das Bildobjekt in ihrer Position gegeneinander verschoben sein, je nach Position des realen Objekts in Bezug zur Fahrtrichtung. Allerdings würden derartige Änderungen bei kleinen Latenzzeiten auch ohne Skalierung des Bildobjekts für einen Fahrer nicht oder kaum wahrnehmbar sein. Gerade aber in einem Nicht-Echtzeitbetrieb der Datenbrille ist eine derartige Ausgestaltung besonders vorteilhaft.

Besonders in diesem Zusammenhang ist es zudem von Vorteil, dass weiterhin eine Lageinformation der Datenbrille im Raum ermittelt wird, insbesondere wobei die Lageinformation eine Position und/oder Positionsänderung und/oder Orientierung und/oder Orientierungsänderung der Datenbrille im Raum, insbesondere in Bezug auf die Umgebung und/oder im Bezug auf das Kraftfahrzeug, darstellt, wobei das Bild in Abhängigkeit von der ermittelten Lageinformation angezeigt wird. Diese Lageinformation kann beispielsweise durch die Datenbrille selbst ermittelt werden, wofür beispielsweise eine geeignete Sensorik in oder an der Datenbrille vorgesehen sein kann. Es kann aber auch im Kraftfahrzeug selbst eine entsprechende Sensorik bereitgestellt werden, die die Position und Orientierung der Datenbrille in Bezug zu einem vorbestimmten Koordinatensystem, z.B. ein kraftfahrzeugfestes Koordinatensystem, ermittelt. Weiterhin werden auch zusätzliche Informationen durch das Kraftfahrzeug bereitgestellt, wie die aktuelle Fahrzeuggeschwindigkeit und/oder der Lenkwinkel, oder es können auch andere Systeme, z.B. das Navigationssystem, des Kraftfahrzeugs genutzt werden, um die Bewegung des Kraftfahrzeugs in der Umgebung zu erfassen, so dass diese Informationen zusätzlich verwendet werden können, um die Position und Orientierung der Datenbrille relativ zu ihrer realen Umgebung insbesondere auch der Umgebung außerhalb des Kraftfahrzeugs, zu bestimmen. All diese Informationen können damit vorteilhafterweise genutzt werden, um ein Bildobjekt in geeigneter Weise zu skalieren, so dass dieses in Überdeckung mit dem realen Objekt, auch bei einem zeitlichen Versatz zwischen Aufnahme und Anzeige, angezeigt wird.

Die Ermittlung der Lageinformation der Datenbrille hat aber noch einen weiteren großen Vorteil, unabhängig vom Auftreten von Latenzzeiten. Dies ermöglicht es nämlich zudem, die Nachtsicht-Bildaufnahmeeinrichtung nicht oder nicht nur an der Datenbrille vorzusehen, sondern beispielsweise auch am Kraftfahrzeug. Dadurch, dass die Lageinformation der Datenbrille, insbesondere relativ zum Kraftfahrzeug, bekannt ist, können durch einfache mathematische Transformationen vom Kraftfahrzeugkoordinatensystem ins Brillenkoordinatensystem Bildobjekte in den aufgenommenen Bildern bei Anzeige durch die Datenbrille dennoch an der richtigen Stelle, nämlich in Überlagerung mit den realen Objekten, angezeigt werden.

Bei einer weiteren vorteilhaften Ausgestaltung der Erfindung wird das Bild der Umgebung in ein gesamtes Sichtfeld der Datenbrille, das ein Sichtfeld eines Benutzers, der die Datenbrille trägt, approximiert, in Überdeckung mit dem Realbild eingeblendet. Mit anderen Worten wird hierdurch die gesamte oder nahezu gesamte reale Umgebung, die durch die Datenbrille gesehen werden kann, vom aufgenommenen Bild überdeckt. Diese Überdeckung kann auch nur teiltransparent sein, das heißt es kann vorgesehen sein, dass die reale Umgebung trotz des eingeblendeten Bildes dennoch durch dieses angezeigte Bild hindurch sichtbar ist. Das Bild kann aber auch so eingeblendet werden, dass die vom Bild überdeckten Teile der realen Umgebung nicht mehr sichtbar sind. Durch die Einblendung des Bildes in das gesamte Sichtfeld der Datenbrille können in besonders vorteilhafter Weise die durch die Nachtaufnahmen bereitgestellten Zusatzinformationen maximiert werden und dadurch umfassend die Sicht des Fahrers auf seine reale Umgebung, die nun durch die angezeigten Nachtsichtbilder bereitgestellt wird, optimiert werden.

Weiterhin kann es auch vorgesehen sein, dass nur ein Teil des Bildes mit dem Bildobjekt in nur einen Teil des Sichtfelds der Datenbrille eingeblendet wird. Beispielsweise können relevante Objekte als Bildobjekte aus den aufgenommenen Bildern extrahiert bzw. ausgeschnitten werden und dann nur diese Bildobjekte in Überdeckung mit ihren korrespondierenden realen Objekten durch die Datenbrille eingeblendet werden. So kann beispielsweise gezielt nach Personen, anderen Verkehrsteilnehmern, Kraftfahrzeugen, Verkehrsschildern und dergleichen in den Nachtsicht-Bildaufnahmen gesucht werden, und dann nur die gefundenen Bildobjekte dem Realbild überlagert angezeigt werden. Dadurch wird vorteilhafterweise die gewohnte Sicht des Fahrers auf seine reale Umgebung so wenig wie möglich verändert, und nur relevante Objekte, die z.B. ein mögliches Gefahrenpotenzial darstellen können, durch die Datenbrille eingeblendet, was wiederum gezielt die Aufmerksamkeit des Fahrers erhöht und auf die eingeblendeten Bildobjekte lenkt.

Zudem ist es eine besonders vorteilhafte Ausgestaltung der Erfindung, wenn das aufgenommene Bild vor der Anzeige des Bildes bearbeitet wird, so dass das Bildobjekt in seiner optischen Erscheinung verändert wird, insbesondere wobei das Bildobjekt optisch markiert und/oder hervorgehoben und/oder eine Kontur des Bildobjekts optisch hervorgehoben wird. Auf diese Weise kann die Aufmerksamkeit des Fahrer bzw. Benutzers noch gezielter auf die entsprechenden Bildobjekte gelenkt werden, so dass gerade Gefahrensituationen für einen Fahrer deutlich einfacher und schneller erfassbar sind. Unter einer Bearbeitung des aufgenommenen Bildes soll dabei auch verstanden werden, dass Bildobjekte im Bild lokalisiert werden können, und korrespondierend zu diesen Bildobjekten bei der Anzeige dieser Bildobjekte zusätzlich ein künstlicher digitaler Inhalt, wie beispielsweise ein Rahmen um das Bildobjekt oder eine nachgezogene Kontur des Bildobjekts eingeblendet werden können. Es können aber auch die Bilddaten selbst bearbeitet werden, so dass beispielsweise Bildobjekte rot eingefärbt werden, um die optische Markierung der Bildobjekte bereitzustellen.

Des Weiteren umfasst die Erfindung ein System mit einer Datenbrille, die dazu ausgelegt ist, ein Bild derart anzuzeigen, dass dieses einer realen Umgebung der Datenbrille zumindest zum Teil überlagert ist, wenn die reale Umgebung der Datenbrille durch die Datenbrille betrachtet wird. Weiterhin weist das System eine Nachtsicht-Bildaufnahmeeinrichtung auf, die dazu ausgelegt ist, das Bild als ein Bild der realen Umgebung der Datenbrille, also ein Nachtsichtbild der realen Umgebung, aufzunehmen, wobei das System weiterhin dazu ausgelegt ist, mittels der Datenbrille das Bild derart anzuzeigen, dass ein von einem in der Umgebung angeordneten Objekt aufgenommenes Bildobjekt im Bild in Überdeckung mit dem Objekt in der Umgebung angezeigt wird.

Die für das erfindungsgemäße Verfahren und seine Ausgestaltungen genannten Merkmale, Merkmalskombinationen und deren Vorteile gelten in gleicher Weise für das erfindungsgemäße System. Weiterhin ermöglichen die im Zusammenhang mit dem erfindungsgemäßen Verfahren und seinen Ausgestaltungen genannten Verfahrensschritte die Weiterbildung des erfindungsgemäßen Systems durch weitere gegenständliche Merkmale.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen.

Dabei zeigen:
- Fig. 1: eine schematische Darstellung eines Systems mit einer Datenbrille und einem Kraftfahrzeug, in welchem die Datenbrille betrieben werden soll, gemäß einem Ausführungsbeispiel der Erfindung;
- Fig. 2: eine schematische Darstellung einer realen Umgebung der Datenbrille bei Dunkelheit;
- Fig. 3: eine schematische Darstellung eines mittels einer NachtsichtBildaufnahmeeinrichtung aufgenommenen Bildes der realen Umgebung, das mittels der Datenbrille in Überlagerung mit der realen Umgebung angezeigt wird; und
- Fig. 4: eine schematische Darstellung des durch die Nachtsicht-Bildaufnahmeeinrichtung aufgenommenen und mittels der Datenbrille angezeigten Bildes, wobei nur vorbestimmte Bildobjekte im aufgenommenen Bild mittels der Datenbrille in Überlagerung mit der realen Umgebung angezeigt werden.

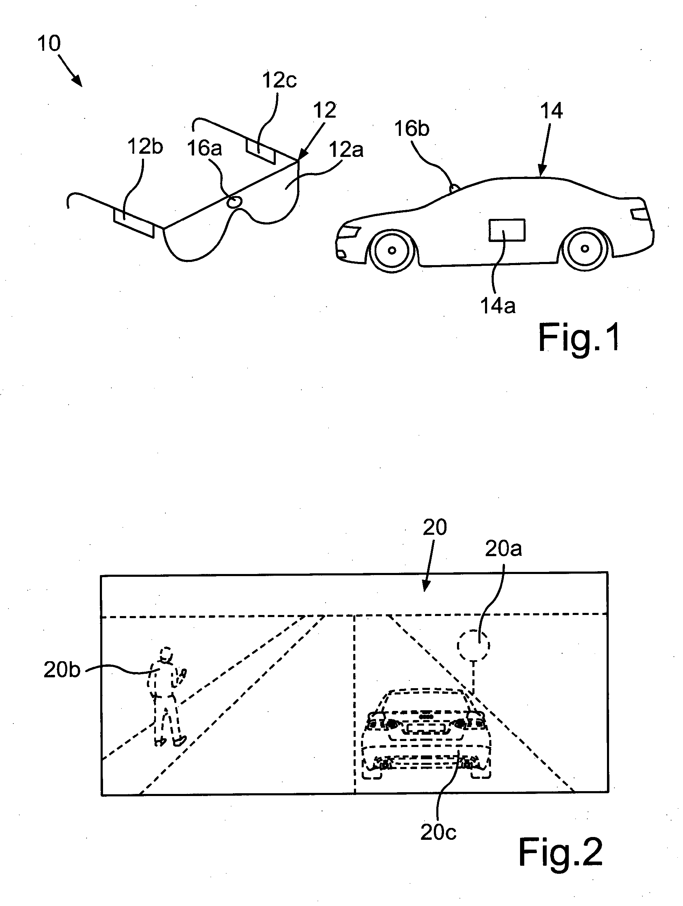

Fig. 1 zeigt eine schematische Darstellung eines Systems 10 mit einer Datenbrille 12 und einem Kraftfahrzeug 14, in welchem die Datenbrille 12 betrieben werden soll. Die Datenbrille 12 weist eine Anzeigefläche 12a auf, die hier exemplarisch als Brillengläser ausgebildet ist, aber auch beispielsweise als Displays mit veränderbarem Transparenzgrad oder auch andersartig ausgebildet sein könnte. Beim Tragen der Datenbrille 12 durch einen Benutzer kann also die reale Umgebung der Datenbrille 12 durch die Anzeigefläche 12a für den Benutzer sichtbar sein. Zudem weist die Datenbrille 12 eine Steuereinrichtung 12b zum Ansteuern der Datenbrille 12 auf, wobei beispielsweise auch ein Projektionsmodul der Datenbrille 12 vorgesehen sein kann, mittels welchem sich Bilder mittels Projektion über die Anzeigefläche 12a in Überlagerung mit der realen Umgebung einblenden lassen. Alternativ kann es auch vorgesehen sein, dass die Steuereinrichtung 12b die Anzeigefläche 12a, wenn diese beispielsweise als Display ausgebildet ist, direkt ansteuert, um Bilder oder Objekte in Überlagerung mit der realen Umgebung durch die Datenbrille 12 einzublenden.

Weiterhin weist das System 10 eine Nachtsicht-Bildaufnahmeeinrichtung, insbesondere in Form einer Nachtsichtkamera 16a auf, welche in diesem Beispiel an der Datenbrille 12 angeordnet ist. Durch die Nachtsichtkamera 16a können vorteilhafterweise Nachtsichtbilder von der realen Umgebung aufgenommen und dem Benutzter über die Anzeigefläche 12a angezeigt werden, wobei insbesondere die aufgenommenen Nachtsichtbilder deckungsgleich über das Realbild, d.h. der Sicht auf die reale Umgebung, gelegt werden. Dadurch ist es vorteilhafterweise möglich, einem Fahrer durch die Brille 12 die vor sich liegende Szenerie im Nachtsichtmodus um wesentliche Informationen angereichert zur Verfügung zu stellen, was diesem insbesondere erlaubt bei Gefährdungen schneller und unmittelbar zu reagieren. Zudem kann die Datenbrille 12 eine Positionsbestimmungs- und Verfolgungseinrichtung 12c aufweisen. Durch diese Positionsbestimmungseinrichtung 12c ist es möglich, Kopfbewegungen eines Benutzers, der die Datenbrille 12 trägt, zu bestimmen und zu verfolgen. Insbesondere ist die Positionsbestimmungseinrichtung 12c dabei dazu ausgelegt, die Position und Orientierung der Datenbrille 12 sowie auch Positionsänderungen und/oder Orientierungsänderungen im Bezug zu einem vorbestimmten Koordinatensystem, z.B. einem in Bezug auf die reale Umgebung festen, zu erfassen und auszuwerten. Dies ermöglicht es, auch während der Fahrt und bei Kopfbewegungen des Benutzers, sowie auch gegebenenfalls bei Latenzzeiten zwischen dem Aufnehmen eines jeweiligen Nachtsichtbildes und dessen Anzeigen, dass das Nachtsichtbild deckungsgleich über das Realbild gelegt werden kann. Das Nachtsichtbild wird also derart angezeigt, dass ein von einem in der realen Umgebung angeordneten Objekt aufgenommenes Bildobjekt im Nachtsichtbild in Überdeckung mit dem Objekt in der realen Umgebung angezeigt wird.

Da diese Datenbrille 12 für den Einsatz in einem Kraftfahrzeug 14 vorgesehen ist, ist es vorteilhafterweise nun weiterhin möglich, auch bestimmte Funktionen durch das Kraftfahrzeug 14 selbst bereitzustellen. Beispielsweise kann die Nachtsicht-Bildaufnahmeeinrichtung des Systems 10, zum Beispiel ebenfalls in Form einer Nachtsichtkamera 16b am Kraftfahrzeug 14 angeordnet sein. Weiterhin kann das Kraftfahrzeug 14 auch ein Steuer- und Kommunikationsmodul 14a aufweisen, welches eine Kommunikation mit der Datenbrille 12, die dann bevorzugt ebenfalls eine solche Kommunikationseinrichtung aufweist, ermöglicht. Dadurch lassen sich beispielsweise die durch die Nachtsichtkamera 16b am Kraftfahrzeug aufgenommene Nachtsichtbilder an die Datenbrille 12 übermitteln und durch diese anzeigen. Darüber hinaus kann auch eine Tracking-Einrichtung im Kraftfahrzeug 14 vorgesehen sein, die es ermöglicht, die Position und Orientierung der Datenbrille 12 relativ zum Kraftfahrzeug zu bestimmen. Auch können weitere Kraftfahrzeugdaten herangezogen werden, wie beispielsweise die Fahrgeschwindigkeit oder von weiteren Kameras des Kraftfahrzeugs aufgenommene Bilddaten, um die Position, Bewegung und Orientierung des Kraftfahrzeugs 14 und damit auch der Datenbrille 12 relativ zur Umgebung ermitteln zu können. All diese Daten können vorteilhafterweise genutzt werden, um die durch die Nachtsichtkamera 16a, 16b aufgenommenen Nachtsichtbilder an der richtigen Stelle auf der Anzeigefläche 12a darzustellen.

Die Verlagerung bestimmter Funktionalitäten auf das Kraftfahrzeug 14 hat dabei den großen Vorteil, dass sich dadurch das Gewicht und die Größe der Datenbrille 12 reduziert, was wiederum den Tragekomfort steigert. Weiterhin können für bestimmte Funktionen, die viel Rechenaufwand erfordern, gezielt Rechenkapazitäten des Kraftfahrzeugs 14 genutzt werden. Auch können bereits bestehende Einrichtungen des Kraftfahrzeugs 14, wie beispielsweise Kameras und Informationssysteme oder auch Kommunikationssysteme, vorteilhafterweise genutzt werden.

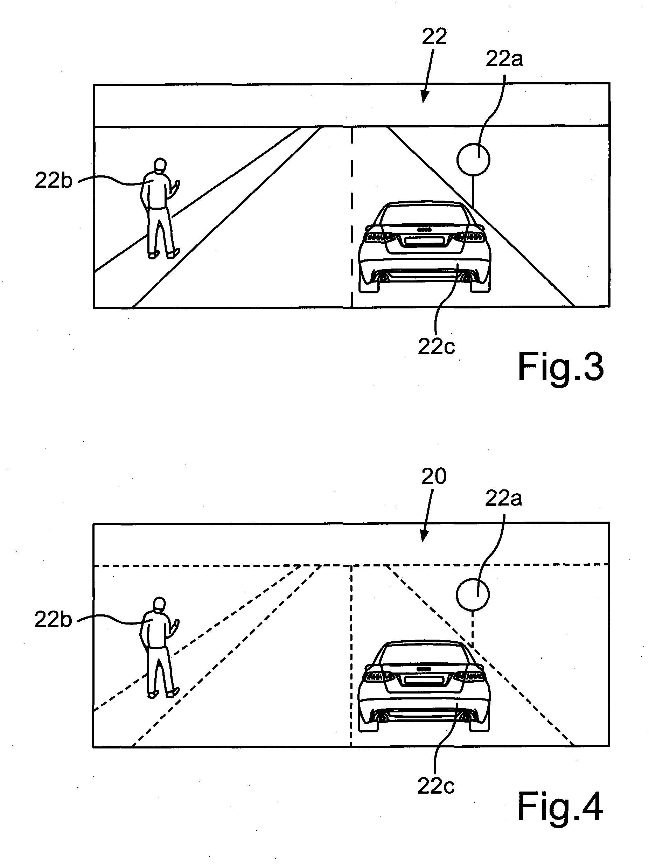

Fig. 2 zeigt eine schematische Darstellung einer realen Umgebung 20, zum Beispiel bei Nacht oder Dämmerung, aus Sicht eines Fahrers. Objekte 20a, 20b, 20c in der Umgebung 20 können unter Umständen bei Nacht oder mangelnder Beleuchtung für einen Fahrer nur schlecht oder gar nicht zu erkennen sein, was durch die gestrichelten Linien deutlich gemacht werden soll. Die Aufnahme von Nachtsichtbildern und deren Anzeige durch die Datenbrille 12 ermöglicht es nun in vorteilhafterweise gerade diese Objekte 20a, 20b, 20c, wie beispielsweise Personen 20b, andere Verkehrsteilnehmer, wie beispielsweise Kraftfahrzeuge 20c, oder Verkehrszeichen 20a deutlich besser sichtbar zu machen, was anhand von Fig. 3 und Fig. 4 veranschaulicht werden soll.

Fig. 3 zeigt dabei eine schematische Darstellung eines durch die Nachtsichtkamera 16a, 16b aufgenommenen Bildes, das mittels der Datenbrille 12 in Überlagerung mit der realen Umgebung 20 angezeigt wird. Das Nachtsichtbild 22 wird in diesem Beispiel vollständig in das Sichtfeld des Fahrers bzw. der Datenbrille 12 eingeblendet. Viele Informationen der realen Umgebung 20 können auf diese Weise für den Fahrer deutlich besser sichtbar gemacht werden. Insbesondere relevante Objekte 20a, 20b, 20c der realen Umgebung 20 können durch die Darstellung des korrespondierenden Nachtsichtbildes 22 mit den korrespondierenden Bildobjekten 20a, 20b und 20c deutlich besser sichtbar gemacht werden.

Fig. 4 zeigt dabei ein weiteres Ausführungsbeispiel, in welchem nun nicht das gesamte aufgenommene Nachtsichtbild 22 über die Datenbrille 12 eingeblendet wird, sondern lediglich die relevanten Bildobjekte 22a, 22b und 22c. Der Fahrer bzw. Nutzer der Datenbrille 12 sieht also unverändert seine reale Umgebung 20, in welche nun die Nachtsichtaufnahmen bestimmter Objekte 20a, 20b und 20c als korrespondierende Bildobjekte 22a, 22b und 22c eingeblendet sind. Dadurch kann vorteilhafterweise der Fahrer auf relevante Objekte in seiner realen Umgebung 20 aufmerksam gemacht werden. Zusätzlich besteht auch die Möglichkeit, diese relevanten Objekte 22a, 22b und 22c durch eine entsprechende Bildverarbeitung zusätzlich optisch hervorzuheben, zu markieren, Konturen zu verstärken oder farblich hervorzuheben, um den Fahrer noch verstärkt auf mögliche Gefahren aufmerksam zu machen.

Die beschriebenen aufgenommenen Nachtsichtbilder bzw. deren Bildobjekte 22a, 22b, 22c werden bevorzugt in Echtzeit mittels der Datenbrille 12 eingeblendet, insbesondre als 2D-Bild oder auch als 3D-Bild, an der richtigen Stelle, d.h. deckungsgleich zu den jeweilig korrespondierenden realen Objekten 20a, 20b, 20c. Darüber hinaus kann es auch vorgesehen sein, verschiedene Betriebsmodi für die Datenbrille 12 vorzusehen, so dass ein Einblenden der Nachtsichtbilder 22 nur in einem Nachtsichtmodus der Datenbrille 12 erfolgt. Auch können Bedienelemente an der Datenbrille 12 und/oder im Kraftfahrzeug 14 vorgesehen sein, mittels welchen sich die Datenbrille 12 bedienen lässt, und insbesondere der Nachtsichtmodus aktivieren und deaktivieren lässt. Alternativ oder zusätzlich können auch Sensoren, zum Beispiel Helligkeitssensoren, vorgesehen sein, um bei entsprechender Dunkelheit den Nachtsichtmodus automatisch zu aktivieren.

Insgesamt wird so ein Verfahren zum Betreiben einer Datenbrille und ein System mit einer Datenbrille bereitgestellt, welche es durch das Anzeigen von Nachtsichtbildern in Überdeckung mit einem Realbild einer Umgebung ermöglicht, die Sicht des Fahrers bei Nacht zu verbessern, hilfreiche und fahrerunterstützende Funktionen bereitzustellen, und damit den Fahrer vor allem auf potenzielle Gefahrensituationen aufmerksam zu machen.

## Patentansprüche

1. Verfahren zum Betreiben einer Datenbrille (12) in einem Kraftfahrzeug (14), wobei
- eine Lageinformation der Datenbrille (12) im Raum ermittelt wird, wobei die Lageinformation eine Position und Orientierung der Datenbrille im Raum darstellt;
- mittels der Datenbrille (12) ein Bild (22) angezeigt wird, das einer realen Umgebung (20) der Datenbrille (12) zumindest zum Teil überlagert ist, wenn die reale Umgebung (20) durch die Datenbrille (12) betrachtet wird, wobei das Bild (22) ein Bild (22) der realen Umgebung (20) darstellt, das mittels einer Nachtsicht-Bildaufnahmeeinrichtung (16a, 16b) aufgenommen wird;
- das Bild (22) derart angezeigt wird, dass ein von einem in der realen Umgebung (20) angeordneten Objekt (20a, 20b, 20c) aufgenommenes Bildobjekt (22a, 22b, 22c) im Bild (22) in Überdeckung mit dem Objekt (20a, 20b, 20c) in der realen Umgebung (20) angezeigt wird;
**dadurch gekennzeichnet, dass**
- das aufgenommene Bild (22) vor der Anzeige des Bildes (22) bearbeitet wird, so dass das Bildobjekt (22a, 22b, 22c) in seiner optischen Erscheinung verändert wird, und das Bildobjekt (22a, 22b, 22c) optisch markiert wird, wobei Bilddaten selbst bearbeitet werden, um die optische Markierung des Bildobjekts bereitzustellen;
- das Bild (22) mit einer vorbestimmten Latenzzeit in Bezug auf die Aufnahme des Bildes (22) angezeigt wird, wobei zumindest das Bildobjekt (22a, 22b, 22c) in Abhängigkeit von der vorbestimmten Latenzzeit skaliert wird;
- durch das Kraftfahrzeug (14) zusätzliche Informationen betreffend einen Lenkwinkel und eine Fahrzeuggeschwindigkeit bereitgestellt werden;
- zumindest das Bildobjekt (22a, 22b, 22c) in Abhängigkeit von der vorbestimmten Latenzzeit, der ermittelten Lageinformation und den zusätzlichen Informationen skaliert wird;
- das Bildobjekt (22a, 22b, 22c) in seiner Größe und/oder einer Anzeigeposition des Bildobjekts (22a, 22b, 22c) skaliert wird, so dass das Bildobjekt (22a, 22b, 22c) in Überdeckung mit dem Objekt (20a, 20b, 20c) in der Umgebung (20) angezeigt wird.

2. Verfahren nach Anspruch 1,
**dadurch gekennzeichnet, dass**
das Bild (22) der Umgebung (20) in ein gesamtes Sichtfeld der Datenbrille (12), das ein Sichtfeld eines Benutzers, der die Datenbrille (12) trägt, approximiert, in Überdeckung mit der realen Umgebung (20) eingeblendet wird.

3. Verfahren nach Anspruch 1,
**dadurch gekennzeichnet, dass**
nur ein Teil des Bildes (22) mit dem Bildobjekt (22a, 22b, 22c) in nur einen Teil des Sichtfelds der Datenbrille (12) eingeblendet wird.

4. System (10) mit einer Datenbrille (12) zur Verwendung in einem Kraftfahrzeug (14) und mit einer Nachtsicht-Bildaufnahmeeinrichtung (16, 16b),
**dadurch gekennzeichnet, dass**
das System (10) dazu ausgelegt ist, ein Verfahren nach einem der vorhergehenden Ansprüchen durchzuführen.

## Claims

1. A method for operating data goggles (12) in a motor vehicle (14), wherein
- pose information of the data goggles (12) in the space is ascertained, wherein the pose information represents a position and orientation of the data goggles in the space;
- an image (22) is displayed by means of the data goggles (12), which is at least partially superimposed on a real environment (20) of the data goggles (12), if the real environment (20) is viewed through the data goggles (12), wherein the image (22) presents an image (22) of the real environment (20), which is captured by means of a night vision image capturing device (16a, 16b);
- the image (22) is displayed such that an image object (22a, 22b, 22c) captured of an object (20a, 20b, 20c) arranged in the real environment (20) is displayed in the image (22) in superposition with the object (20a, 20b, 20c) in the real environment (20);
**characterized in that**
- the captured image (22) is processed before display of the image (22) such that the image object (22a, 22b, 22c) is altered in its optical appearance, and the image object (22a, 22b, 22c) is optically marked, wherein the image data itself is processed to provide the optical marking of the image object;
- the image (22) is displayed with a predetermined latency period with respect to the capture of the image (22), wherein at least the image object (22a, 22b, 22c) is scaled depending on the predetermined latency period;
- additional information relating to a steering angle and a vehicle speed is provided by the motor vehicle (14);
- at least the image object (22a, 22b, 22c) is scaled depending on the predetermined latency period, the ascertained pose information and the additional information;
- the image object (22a, 22b, 22c) is scaled in its size and/or a display position of the image object (22a, 22b, 22c) such that the image object (22a, 22b, 22c) is displayed in superposition with the object (20a, 20b, 20c) in the environment (20).

2. The method according to claim 1,
**characterized in that**
the image (22) of the environment (20) is overlaid on an entire field of view of the data goggles (12), which approximates a field of view of a user wearing the data goggles (12), in superposition with the real environment (20).

3. The method according to claim 1,
**characterized in that**
only a part of the image (22) with the image object (22a, 22b, 22c) is overlaid on only a part of the field of view of the data goggles (12).

4. A system (10) with data goggles (12) for use in a motor vehicle (14) and with a night vision image capturing device (16a, 16b),
**characterized in that**
the system (10) is adapted to perform a method according to any one of the preceding claims.

## Revendications

1. Procédé pour faire fonctionner des lunettes intelligentes (12) dans un véhicule à moteur (14), comportant :
- déterminer une information de situation dans l'espace des lunettes intelligentes (12), les informations de situation représentant une position et une orientation des lunettes intelligentes dans l'espace ;
- afficher, au moyen des lunettes intelligentes (12), une image (22) qui est au moins partiellement superposée à un environnement réel (20) des lunettes intelligentes (12) lorsque l'environnement réel (20) est regardé à travers les lunettes intelligentes (12), l'image (22) représentant une image (22) de l'environnement réel (20) qui est enregistrée au moyen d'un dispositif d'enregistrement d'images de vision nocturne (16a, 16b) ;
- afficher l'image (22) de telle sorte qu'une image-objet (22a, 22b, 22c) enregistrée d'un objet (20a, 20b, 20c) situé dans l'environnement réel (20) est affichée dans l'image (22) d'une manière recouvrant l'objet (20a, 20b, 20c) dans l'environnement réel (20) ;
**caractérisé en ce que**
- l'image (22) enregistrée est traitée avant d'afficher l'image (22), de sorte que l'image-objet (22a, 22b, 22c) est changée en termes d'aspect optique et l'image-objet (22a, 22b, 22c) est marquée optiquement, les données d'image étant elles-mêmes traitées afin d'assurer le marquage optique de l'image-objet ;
- l'image (22) est affichée avec un temps de latence prédéterminé par rapport à l'enregistrement de l'image (22), l'image-objet (22a, 22b, 22c) étant au moins mise à l'échelle en fonction du temps de latence prédéterminé ;
- des informations supplémentaires concernant un angle de braquage et une vitesse de véhicule sont fournies par le véhicule à moteur (14) ;
- au moins l'image-objet (22a, 22b, 22c) est mise à l'échelle en fonction du temps de latence prédéterminé, de l'information de situation déterminée et des informations supplémentaires ;
- l'image-objet (22a, 22b, 22c) est mise à l'échelle en termes de taille et/ou d'une position d'affichage de l'image-objet (22a, 22b, 22c), de sorte que l'image-objet (22a, 22b, 22c) est affichée d'une manière recouvrant l'objet (20a, 20b, 20c) dans l'environnement (20).

2. Procédé selon la revendication 1,
**caractérisé en ce que**
l'image (22) de l'environnement (20) est insérée dans un champ de vision global des lunettes intelligentes (12) qui approxime un champ de vision d'un utilisateur portant les lunettes intelligentes (12), d'une manière recouvrant l'environnement réel (20).

3. Procédé selon la revendication 1,
**caractérisé en ce que**
seule une partie de l'image (22) est insérée avec l'image-objet (20a, 20b, 20c) dans une seule partie du champ de vision des lunettes intelligentes (12).

4. Système (10) comportant des lunettes intelligentes (12) pour une utilisation dans un véhicule à moteur (14) et un dispositif d'enregistrement d'images de vision nocturne (16a, 16b), caractérisé ce que
le système (10) est conçu pour mettre en œuvre un procédé selon l'une des revendications précédentes.
